# EUROPÄISCHE PATENTSCHRIFT

(11) **EP 0 919 707 B1**
(45) Veröffentlichungstag und Bekanntmachung des Hinweises auf die Patenterteilung: **02.04.2003**
(21) Anmeldenummer: 97810931.2
(22) Anmeldetag: 01.12.1997
(51) Int. Cl.: F02C 7/18, F02C 7/224, F01K 23/10

(54) **Gasturbinen-Kühlluftkühler**
Cooling-air cooling unit for gas turbines
Refroidisseur à air froid pour turbines à gaz

(43) Veröffentlichungstag der Anmeldung: 02.06.1999
(73) Patentinhaber: ALSTOM (Switzerland) Ltd, 5401 Baden (CH)
(72) Erfinder: Liebig, Erhard, Dr., 79725 Laufenburg (DE)

(56) Entgegenhaltungen:
- EP-A- 0 584 958
- EP-A- 0 709 561
- WO-A-97/03281
- US-A- 5 491 971
- US-A- 5 661 968

## Beschreibung

### Technisches Gebiet

Die Erfindung betrifft eine Vorrichtung zum Rückkühlen von verdichteter Luft in einer Gasturbinenanlage, im wesentlichen bestehend aus einem Verdichter, einer Brennkammer und einer Gasturbine, wobei ein Teil der verdichteten Luft in einem Luftkühler Wärme abgibt und als Kühlluft an die Gasturbinenkomponenten gefördert wird, und wobei die im Luftkühler anfallende Wärme über das Kühlmittel an Verbraucher abgegeben wird.

### Stand der Technik

Gasturbinen der modernen Generation und der oberen Leistungsklasse arbeiten mit sehr hohen Turbinen-Eintrittstemperaturen, was eine Kühlung der Brennkammer, der Rotoren und der Beschaufelung unumgänglich macht. Hierfür wird in der Regel hochverdichtete Luft am Verdichteraustritt sowie ggfs. aus einer niedrigeren Druckstufe abgezogen. Da ein sehr hoher Anteil der verdichteten Luft für die heutige übliche Vormischverbrennung gebraucht wird, verbleibt einerseits für Kühlzwecke nur ein Minimum an Kühlluft. Anderseits ist diese für die Kühlung bestimmte Luft infolge der Verdichtung bereits sehr heiss, weshalb sich deren vorgängige Kühlung empfiehlt. Bekannt ist hierbei das Kühlen mittels Wassereinspritzung ("gas-quenching"); mit dieser Methode wird indes die hochwertige Wärme der Kühlluft, deren Anteil bei den heutigen Maschinen bis zu 20 MW betragen kann, nur teilweise ausgenutzt.

Im Zusammenhang mit einem kombinierten Gas-Dampf-Turbinenprozess ist ein Zwangdurchlaufdampferzeuger zum Kühlen von hochverdichteter Luft bekannt aus der EP-A-709 561. Dort wird ein Teilstrom des Kessel-Speisewassers entweder stromaufwärts oder stromabwärts des Economisers entnommen und nach einer weiteren Vorwärmung, einer Verdampfung und einer Überhitzung im Kühler in den Hochdrucküberhitzer des Abhitzekessels zurückgeführt. Dieser Kessel ist als Umlaufkessel mit Trommeln konzipiert. Um Feuchte- oder Wasserdurchbrüche zur Dampfturbine zu vermeiden, wenn der Kühler nass gefahren wird, wird das aufgeheizte Wasser beziehungsweise der Nassdampf so lange in einen Blow-Down Tank geleitet, bis der Kühler trocken ist oder bis definierte Bedingungen am Kühleraustritt stabil vorliegen, beispielsweise Heissdampf mit einer Überhitzung von einigen Kelvin oder Nassdampf mit einer Feuchte von wenigen %. Neben den Wasserverlusten hat dies den Nachteil einer entsprechenden Überwachung und Regelung zur Folge.

Eine weitere *in US 5491971 beschriebene, auf einem geschlossenen Kühlluftsystem beruhende* Lösung, bei der die rückzukühlende Luft der Dampferzeugung dient, sieht vor, bei Kombianlagen auch einen separaten Zwangdurchlaufkessel als Kühler zu benutzen. Hier besteht der Nachteil insbesondere in den hohen Drücken im Kühlsystem, welche wasserdampfseitig bis zu 180 bar und mehr betragen können. Spezielle Sicherheitsmassnahmen sind erforderlich, um zu vemeiden, dass Wasser oder Dampf in die Gasturbinen-Kühlluft eindringt. Darüber hinaus gelten im Verdampferbereich druckabhängige Temperaturverhältnisse, was zu kompliziertem Betriebsverhalten führen kann. Eine universelle Auslegung des Systemes ist nicht möglich; schon geringe Änderungen auf der Luft- bzw. Wasserseite bedingen jeweils eine Neuauslegung. *Dieses System ist für die Kühlung von Gastubinenkomponenten mit Filmkühlung nicht geeignet.*

Es bietet sich in der Folge an, zur Rückkühlung Wärmerekuperatoren als Kühler zu verwenden. Die Probleme der konvektiven Wärmeübertragung zwischen einem Gas und einer Flüssigkeit sind aus der Literatur wohlbekannt. Der Wärmedurchgangsprozess wird massgeblich durch den Wärmeübergang an der Gasphase kontrolliert, da diese den thermischen Widerstand der Kette darstellt. Um dieses Problem in den Griff zu bekommen, werden in den Wärmetauschapparaten auf der Seite der Gasphase strukturierte Flächen, wie Rippen, Noppen oder Rillen angewendet; solche strukturierten Flächen sind unter dem Begriff "extended surfaces" bekannt. Bekannt aus der DE-A1-19 54 308 ist die Verwendung eines konvektiven Gegenstromübertragers in einem kombinierten Gas-Dampfturbinenprozess mit Abhitzedampferzeugung. Dieser Wärmerekuperator ist ein mit Rippenrohren bestücktes Rohrbündel, wobei die von der Flüssigkeit durchströmten Rohre eintrittsseitig und austrittsseitig in je einen Sammler münden, welche mit der Dampftrommel des Abhitzedampferzeugers verbunden sind. Dieses Rückkühlsystem ist somit an das Vorhandensein eines Dampferzeugers gebunden und deshalb bei Gasturbinen allein grundsätzlich nicht einsetzbar.

*Eine Vorrichtung zur Rückkühlung eines zur Kühlung von Gasturbinenkomponenten bestimmten Teils der verdichteten Kompressorluft ist in US 5661968 offenbart. In einem Gaskühler gibt die Luft ihre Wärme an einen Kühlmittelkreislauf ab. Der in dem Kreislauf zirkulierende Wärmeträger gibt die im Luftkühler aufgenommene Wärme an mindestens einen Verbraucher ab. Nicht zuletzt aus Sicherheitsgründen im Falle des Auftretens von Leckagen wird Wasser als Wärmeträger eingesetzt. Als Verbraucher fungiert der Verdampfer eines Abhitzekessels.*
*Zur Vermeidung der Verdampfung des Wärmeträgers ist es erforderlich, den Zwischenkreislauf unter einem Druck zu betreiben, der über demjenigen im Verdampfer liegt. Da der Verdampfer eines Abhitzekessels bei Drücken zwischen 40 bar und 120 bar betrieben wird, ist der Druck im Zwischenkreislauf dementsprechend hoch. Erstellung und Betrieb dieses Luftkühlsystems erfordern daher* *einen erhöhten Aufwand. Auch hier besteht der Nachteil des Erfordernisses hoher Sicherheitsmassnahmen, um den Eintritt von Wasser in die Gasturbinenkühlluft zu vermeiden.*

*In EP 0584958 sind Möglichkeiten diskutiert, die der Kühlluft abgenommene Wärme unmittelbar oder mittelbar unter Einschaltung eines Zwischenkreislaufs dem Brennstoff zuzuführen. Als Zwischenkreislauf soll dabei der Schmierölkreislauf füngieren. Schmieröle besitzen jedoch eine relativ niedrige Temperaturbeständigkeit im Temperaturbereich bis höchstens 60°C. Da aufgrund der hohen Verdichtungsverhältnisse in modernen Gasturbinenanlagen weitaus höhere Lufttemperaturen von über 300°C entstehen, sind die Einsatzmöglichkeiten einer solchen Lösung daher erheblich eingeschränkt. Darüber hinaus besteht bei einem Einsatz dieser Medien eine latente Verkokungsgefahr mit möglichen Folgeschäden.*

### Darstellung der Erfindung

Die Erfindung liegt die Aufgabe zugrunde, für die Kühlluft einer Gasturbine ein konvektives Wärmeübertragersystem mit *einem Kühlmittelzwischenkreislauf zu schaffen, welches einen* hohen thermodynamischen Nutzungsgrad für hohe Luftund Flüssigkeitstemperaturen und für hohe Luftdrücke *auf unterschiedlichem Druckniveau gestattet.*

Die spezielle thermohydraulische Anforderung an diese Klasse von Apparaten ist dabei folgende: hohe Lufteintrittstemperatur zwischen 300-530°C, hoher Druck auf der Luftseite zwischen 20 und 35 bar, niedriger Druck auf der Flüssigkeitsseite, geringe luft - und flüssigkeitsseitige Druckverluste und relativ hohe Aufwärmspanne der Flüssigkeit bis zu 200°C im Sinne der Wärmerekuperation. Insbesondere wird eine gute Regelbarkeit der Kühllufttemperatur angestrebt.

Erfindungsgemäss wird dies dadurch erreicht, dass *mehrere* Luftkühler *mit je unterschiedlichem Druckniveau der zu kühlenden Luft parallel geschaltet sind, und jeder Luftkühler auf Seiten der Umlaufanlage mit einer regelbaren* Umgehungsleitung versehen ist, und wobei als Wärmeträger ein Thermoöl vorgesehen ist, welches *in an sich bekannter Weise* mittels einer Umwälzpumpe zirkuliert wird.

Die Vorteile sind insbesondere in der *einfachen Zusammenführung von Ölströmen aus verschiedenen Luftkühlern mit luftseitig unterschiedlichem Druckniveau und in der* kühlmittelseitigen Drucklosigkeit des Systems zu sehen. Dadurch ist nicht mit einer Verunreinigung der Kühlluft infolge Ölleckage zu rechnen. Eventuelle Lufteinbrüche im Kühlmittelsystem können auf einfache Art detektiert und separiert werden. Die Temperatur der Kühlluft ist mit höchster Genauigkeit regelbar, selbst bei instationären Betriebsbedingungen.

Bei Verwendung einer solchen Vorrichtung in einem kombinierten Gas/Dampfprozess besteht die Möglichkeit, die aufgenommene Wärme in den *Ab*gaskanal des Dampferzeugers einzubinden, ohne in den eigentlichen Wasser/Dampf-Kreislauf einzugreifen.

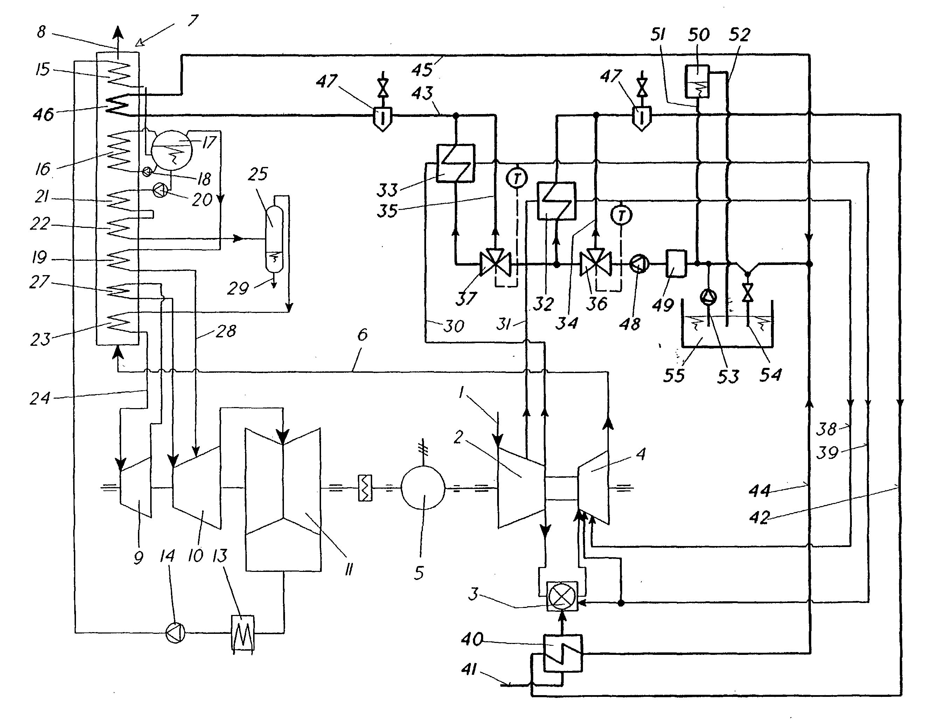

### Kurze Beschreibung der Zeichnung

In der Zeichnung ist ein Ausführungsbeispiel der Erfindung anhand einer kombinierten Gas-Dampf-Kraftwerksanlage schematisch dargestellt. Es sind nur die für das Verständnis der Erfindung wesentlichen Elemente gezeigt. Die Strömungsrichtung der Arbeitsmittel ist mit Pfeilen dargestellt.

### Weg zur Ausführung der Erfindung

Gemäss der einzigen Figur wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Für die zu Kühlzwecken gebrauchte Luft zweigen von einer Zwischenstelle und vom Austritt des Verdichters zwei Luftleitungen 31, 30 ab und führen zu je einem Kühler 32 respektiv 33. Von deren Luftaustrittsstutzen strömt die abgekühlte Luft über Kühlleitungen 38, 39 zu den verschiedenen Gasturbinenkomponenten.

Die Luftkühler 32, 33 sowie die weiteren Verbraucher sind in einer drucklosen Wärmeübertrager-Umlaufanlage angeordnet. Als Wärmeträger ist ein Thermoöl mit hohem atmoshärischen Siedepunkt vorgesehen. Solche Öle können bis zu Temperaturen von 360°C drucklos eingesetzt werden. Als drucklos gilt, wenn der Dampfdruck im Siedepunkt unter dem atmosphärischem Druck liegt. Es versteht sich, dass im Bedarfsfall ebenso eine geschlossene Umlaufanlage zur Anwendung gelangen könnte, in welcher Temperaturen oberhalb des Siedepunktes gefahren werden könnten. Thermoöl ermöglicht eine gleichmässig und genau zu steuernde Beheizung und kann im gleichen Kreislauf auch zur Kühlung verwendet werden. Im einfachsten Fall weist eine Umlaufanlage folgende Teile auf:

Im Vorlauf 42, der ab Pumpe 48 bis zum Verbraucher 40 definiert ist, befinden sich stromabwärts der motorbetriebenen Umwälzpumpe 48 der eigentliche Luftkühler 32 und parallel hierzu eine regelbare Umgehungsleitung 34. Diese Umgehungsleitung ist einerseits wichtig beim Anfahren der Anlage, um eine thermische Überbelastung des Thermoöls zu vermeiden, anderseits dient sie der genauen Temperatureinstellung des zu kühlenden Mittels anlässlich des Betriebes. Hierzu ist eine Temperaturmessung in der Kühlluftleitung 38 vorgesehen, die zur Einstellung des 3-Wegeventils 36 herangezogen wird. In der zum Verbraucher 40 führenden Leitung 42 ist ausserdem ein Gasabscheider 47 vorgesehen. Dieser eignet sich besonders beim Anfahren der Anlage nach der Befüllung, bei Nachfüllung sowie nach längeren Stillständen, um bei Bildung von Gasen oder Dämpfen diese auszuscheiden. Es versteht sich, dass die Umwälzpumpe 48 genau so gut hinter dem Luftkühler 32 angeordnet sein könnte. Für den in der Zeichnung dargestellten Fall, dass mehrere Kühler 32, 33 parallel geschaltet sind, bietet es sich hingegen an, die Pumpe stromaufwärts dieser Kühler anzuordnen.

Im Rücklauf 44, der ab Verbraucher 40 bis zur Pumpe 48 definiert ist, befinden sich stromabwärts des Verbrauchers die tiefste Stelle des Umlaufsystems, die Abzweigstelle für eine Ausdehnungsleitung sowie ein Filter 49 zum Reinigen des Thermoöls. Ein Ausdehnungsgefäss 50 ist auf der Saugseite der Umwälzpumpe 48 vorgesehen, um dort eindeutige Druckverhältnisse für den Pumpenzulauf zu schaffen. Dieses Ausdehnungsgefäss ist mittels einer Ausdehnungsleitung 51 an das Umlaufsystem angeschlossen. Es ist überdies mit einer Überlaufleitung 52 versehen, welche in einen Vorratsbehälter 55 mündet. Dieses Ausdehnungsgefäss erfüllt mehrere Aufgaben: Zum einen fängt es die durch die Erwärmung verursachte Volumenänderung des Thermoöls auf, zum ändern bewirkt der kalte Ölspiegel im Ausdehnungsgefäss eine Abschirmung des heissen Thermoöls vom Luftsauerstoff.

Mit Thermoöl gefüllt wird eine solche Umlaufanlage über eine Füllpumpe 53 aus dem Vorratsbehälter 55. Dieser ist so dimensioniert ist, dass er die gesamte Menge Kreislaufmittel aufnehmen kann. Die Umlaufanlage ist an ihrem tiefsten Punkt mit einem Entleerungsanschluss versehen, welcher über eine mit einem Absperrventil versehene Ablassleitung 54 in den Vorratsbehälter 55 abgiessen kann.

Da chemische Wärmeträgermittel dazu neigen, sich bei bestimmten Temperaturen zu zersetzen, muss darauf geachtet werden, dass an keiner Stelle der Apparate diese Temperaturen überschritten werden. Darüberhinaus sollte auch der zum Atmoshärendruck gehörende Siedebeginn nicht überschritten werden. Dem wird am einfachsten dadurch Rechnung getragen, dass definierte turbulente Strömungsverhältnisse durch die Wahl von entsprechenden Strömungsgeschwindigkeiten angestrebt werden. Damit können die thermischen Flächenbelastungen auf maximale Wandtemperaturen von z.B. 360° begrenzt werden.

Als erster Verbraucher ist im gezeigten Fall die Vorwärmung des gasförmigen Brennstoffes unmittelbar vor Eintritt in die Gasturbinenbrennkammer 3 angegeben. Die Brennstoffzufuhr ist mit 41 bezeichnet. Das über die Vorlaufleitung 42 anströmende Thermoöl, welches aus den oben genannten Gründen eine Temperatur von höchstens 320°C aufweist, gibt seine Wärme im Brennstoffvorwärmer 40 ab. Dieser Apparat kann so ausgelegt sein, dass die Brennstofftemperatur, die infolge der vorgängigen Verdichtung des Brennstoffes ca. 50°C beträgt, auf ca. 150°C erhöht wird.

Es versteht sich, dass die im Kühler 32 anfallende Wärme auch anderen Verbrauchern, beispielsweise Heisswasser- oder Dampferzeugern zugeführt werden kann. Desweiteren kann auch der Austritt des zweiten dargestellten Kühlers 33, der luftseitig auf einem höheren Druckniveau arbeitet, in den gleichen Vorlauf 42 münden wie der beschriebene Kühler 32 und damit zur Brennstoffvorwärmung herangezogen werden.

In Abweichung hierzu wird nachstehend eine weitere Möglichkeit beschrieben, wie sie in einem kombinierter Gas/Dampf-Kraftwerksanlage Anwendung finden kann. Gemäss Zeichnung ist im Wasser-Dampfkreislauf eine mehrgehäusige Dampfturbine 9, 10 und 11 auf der gleichen Welle mit der Gasturbine (2, 4) angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keine, in der Regel entnahmedampfbeheizte Niederdruckeconomiser, Speisewasserbehälter und Hochdruckeconomiser aufweist. Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufssystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt. Zur Phasentrennung ist eine Abscheideflasche 25 vorgesehen, in welche der Austritt des Hochdruckverdampfers 22 mündet. Die Abscheideflasche ist an ihrem obereren Ende mit dem Hochdrucküberhitzer 23 verbunden. An ihrem unteren Ende ist sie mit einer Abschlämmleitung 29 versehen. Diese Abscheideflasche sorgt dafür, dass der Hochdrucküberhitzer jederzeit trocken bleibt und am Kesselaustritt frühzeitig überhitzter Dampf zur Verfügung steht. Sobald im Hochdruckverdampfer der für einen stabilen Betrieb notwendige Druck erreicht ist, kann der Frischdampf zum Anfahren der Dampfturbine im Gleitdruckbetrieb verwendet werden.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Als Wärmeverbraucher ist im Beispielsfall die Aufheizung des Rauchgasstromes im Abhitzedampferzeuger 7 vorgesehen. Hierzu zweigt hinter der Umwälzpumpe 48 eine weitere Vorlaufleitung 43 ab. In diesem Vorlauf befindet sich ein Kühlluftkühler 33 mit einer parallel geschalteten regelbaren Umgehungsleitung 35, deren Durchfluss ebenfalls über einen Temperaturwert eingestellt wird. Nachdem beide Teilströme zusammengefasst sind, durchströmt das Thermoöl auch hier zunächst einen Gasabscheider 47, bevor es die Wärmetauschflächen des Rauchgaserhitzers 46 beaufschlagt und dann nach der Wärmeabgabe über die Rücklaufleitung 45 zurückströmt.

Diese Art der Wärmeübertragung eignet sich besonders, wenn beispielsweise die Gasturbine von Gas- auf Ölbetrieb umschaltet. In diesem Fall sollte nämlich die Abgastemperatur am austrittsseitigen Ende des Dampferzeugers - die bei Gasbetrieb ca. 90°C betragen kann - den Wert von ca. 170°C nicht unterschreiten, um Taupunktkorrosion zu vermeiden. Abhilfe schafft hier in der Regel das Absperren und unter Druck Setzen des Economisers 15. Mit dieser Massnahme, bei der der Economiser 15 nicht durchströmt wird, heizt sich im Economiser aufgestautes Wasser auf die örtliche Abgastemperatur eingangs des Economisers auf. Da danach keine weitere Wärmeabgabe mehr erfolgt, behalten die Abgase am Austritt des Dampferzeugers ihre für den Taupunktkorrosionsschutz erforderliche Temperatur. Dies bedeutet allerdings, dass die Vorwärmung des Speisewassers im Verdampfersystem 16, 17 durchgeführt werden muss, wodurch die Dampfproduktion etwas zurückgeht. Mit der neuen Massnahme kann dieser Nachteil vermieden werden. Im Rauchgaserhitzer 46 gibt das Thermoöl seine Wärme weitgehend an die den nachfolgenden Economiser 15 beaufschlagenden Rauchgase ab. Da hierdurch deren Temperatur ansteigt, steht genügend Wärme zur Verfügung, um das bisherige Abstellen des Economisers zu vermeiden und dennoch die erforderliche Abgastemperatur am Kesselaustritt aufrechtzuerhalten. Dies umso mehr, als in diesem Fall der Ölfeuerung die erstgenannte Brennstoff-. vorwärmung nicht in Betrieb ist und somit die ganze abzuführende Kühlluftwärme der Rauchgaserwärmung zugeführt werden kann.

Selbstverständlich ist die Erfindung nicht auf die gezeigten und beschriebenen Verbraucher beschränkt. Neben der Gasvorwärmung und/oder der Stützung der Rauchgastemperatur zur Vermeidung von Taupunktkorrosion könnten getrennt hiervon oder zusätzlich folgende Verbraucher zur Anwendung gelangen: ein Dampferzeuger zum Zwecke der Dampfeinspritzung zur Leistungsteigerung der Gasturbine, ein Ölvorwärmer bei sehr niedrigen Aussentemperaturen, ein Wasservorwärmer zum Zwecke der Wassereinspritzung in die Brennkammer bei Ölbetrieb zur Reduktion der Stickoxyde. Desweiteren könnte im Kombibetrieb auch das Speisewasser des Abhitzekessels vorgewärmt werden zur Vermeidung der bereits erwähnten Taupunktkorrosion.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Speisewasserpumpe
- 21: Hochdruckeconomiser
- 22: Hochdruckverdampfer
- 23: Hochdrucküberhitzer
- 24: Frischdampfleitung
- 25: Abscheideflasche
- 27: Zwischenüberhitzer
- 28: Niederdruck-Dampfleitung
- 29: Abschlämmleitung

- 30, 31: Luftleitung
- 32, 33: Luftkühler
- 34, 35: Umgehungsleitung
- 36, 37: Bypassventil
- 38, 39: Kühlleitungen
- 40: Brennstoffvorwärmer
- 41: Brennstoffzufuhr
- 42, 43: Vorlauf
- 44, 45: Rücklauf
- 46: Rauchgaserhitzer
- 47: Gasabscheider
- 48: Umwälzpumpe
- 49: Filter
- 50: Ausdehnungsgefäss
- 51: Ausdehnungsleitung
- 52: Überlaufleitung
- 53: Füllpumpe
- 54: Ablassleitung
- 55: Vorratsbehälter

## Patentansprüche

1. Vorrichtung zum Rückkühlen von verdichteter Luft in einer Gasturbinenanlage, im wesentlichen bestehend aus einem Verdichter (2), einer Brennkammer (3) und einer Gasturbine (4), mindestens einem Luftkühler (32, 33) *zur Kühlung eines Teils der verdichteten Luft, mindestens einem Wärmeverbraucher (40, 46) zur Abnahme der im Luftkühler (32, 33) gewonnenen Wärme sowie einer Wärmeübertrager-Umlaufanlage mit einer Umwälzpumpe (48) zur Zirkulation eines Wärmeträgers innerhalb der Umlaufanlage zwischen dem mindestens einen Luftkühler (32, 33) und dem mindestens einen Wärmeverbraucher (40, 46),*
**dadurch gekennzeichnet, dass** *in der mit einem Thermoöl als Wärmeträger betriebenen Umlaufanlage mehrere Luftkühler (32) und (33) mit je unterschiedlichem Druckniveau der zu kühlenden Luft parallel geschaltet sind, und jeder Luftkühler (32) und (33) auf Seiten der Umlaufanlage mit einer regelbaren Umgehungsleitung (34, 35) ausgerüstet ist.*

2. *Kombinierte Kraftwerksanlage mit einer Vorrichtung nach Anspruch 1*, im wesentlichen bestehend aus einer Gasturbine (4), einer Dampfturbine (9-11) sowie einem Abhitzekessel (7) zur Erzeugung des Arbeitsmittels für die Dampfturbine (9-11), wobei der Abhitzekessel *zumindest* einen Economiser (15) und einen Verdampfer (16) aufweist,
**dadurch gekennzeichnet, dass** der Verbraucher ein *Ab*gaserhitzer (46) ist, welcher im *Ab*gasweg des Abhitzekessels (7) zwischen Verdampfer (16) und Economiser (15) angeordnet ist.

## Claims

1. Device for the recooling of compressed air in a gas turbine plant, essentially consisting of a compressor (2), a combustion chamber (3) and a gas turbine (4), of at least one air cooler (32, 33) for cooling part of the compressed air and at least one heat consumer (40, 46) for the take-off of the heat acquired in the air cooler (32, 33) and of a heat exchanger circulation system with a circulating pump (48) for the circulation of a heat transfer medium within the circulation system between the at least one air cooler (32, 33) and the at least one heat consumer (40, 46), **characterized in that**, in the circulation system operated with a thermal oil as heat transfer medium, a plurality of air coolers (32) and (33), each with a different pressure level of the air to be cooled, are connected in parallel, and each air cooler (32) and (33) is equipped, on the part of the circulation system, with a regulatable bypass line (34, 35).

2. Combined power plant with the device according to Claim 1, essentially consisting of a gas turbine (4), a steam turbine (9-11) and a waste-heat boiler (7) for generating the working medium for the steam turbine (9-11), the waste-heat boiler having at least one economizer (15) and one evaporator (16), **characterized in that** the consumer is an exhaust-gas heater (46) which is arranged in the exhaust-gas path of the waste-heat boiler (7) between the evaporator (16) and the economizer (15).

## Revendications

1. Dispositif pour le refroidissement en retour d'air comprimé dans une installation de turbines à gaz, se composant essentiellement d'un compresseur (2), d'une chambre de combustion (3) et d'une turbine à gaz (4), d'au moins un refroidisseur à air (32, 33) pour le refroidissement d'une partie de l'air comprimé, d'au moins un consommateur de chaleur (40, 46) pour prélever la chaleur obtenue dans le refroidisseur à air (32, 33) ainsi que d'une installation de circulation à transfert de chaleur avec une pompe de recirculation (48) pour faire circuler un fluide caloporteur à l'intérieur de l'installation de circulation entre l'au moins un refroidisseur à air (32, 33) et l'au moins un consommateur de chaleur (40, 46),
**caractérisé en ce que**, dans l'installation de circulation fonctionnant avec une huile thermique servant de fluide caloporteur, plusieurs refroidisseurs à air (32) et (33) avec un niveau de pression respectif différent de l'air à refroidir sont montés en parallèle, et chaque refroidisseur à air (32) et (33) est équipé, sur des côtés de l'installation de circulation, d'une conduite de contournement réglable (34, 35).

2. Centrale combinée avec un dispositif selon la revendication 1, se composant essentiellement d'une turbine à gaz (4), d'une turbine à vapeur (9-11) ainsi que d'une chaudière de récupération (7) pour générer le fluide de travail pour la turbine à vapeur (9-11), la chaudière de récupération présentant au moins un économiseur (15) et un évaporateur (16),
**caractérisée en ce que** le consommateur est un réchauffeur à gaz d'échappement (46), qui est disposé dans la trajectoire des gaz d'échappement de la chaudière de récupération (7) entre l'évaporateur (16) et l'économiseur (15).
